Europäisches Patentamt

(19) **European Patent Office**

Office européen des brevets

(11) Publication number: **0 028 130**
**A1**

(12) # EUROPEAN PATENT APPLICATION

(21) Application number: **80303752.2**

(51) Int. Cl.³: **A 61 C 15/00**

(22) Date of filing: **23.10.80**

---

(30) Priority: **26.10.79 GB 7937272**
**11.06.80 GB 8019021**

(43) Date of publication of application: **06.05.81**
**Bulletin 81/18**

(84) Designated Contracting States: **AT BE CH DE FR GB IT LI NL SE**

(71) Applicant: **Birch, Peter Donald Wallace, 37, Homewood Avenue Cuffley, Potters Bar Hertfordshire (GB)**

(72) Inventor: **Birch, Peter Donald Wallace, 37, Homewood Avenue Cuffley, Potters Bar Hertfordshire (GB)**

(74) Representative: **Robinson, John Stuart et al, Marks & Clerk 57/60 Lincoln's Inn Fields, London WC2A 3LS (GB)**

---

(54) **Improvements in or relating to tooth cleaning aids and methods of cleaning teeth.**

(57)    A tooth cleaning aid is provided in the form of a strip (1) of latex rubber suitable for insertion between adjacent teeth (2). When inserted between the teeth, the strip is moved longitudinally while pressed against the surface of a tooth so as to clean it.

Improvements in or relating to tooth cleaning aids and methods of cleaning teeth

The invention relates to a tooth cleaning aid and to a method of cleaning teeth using such an aid.

According to one aspect of the invention, there is provided a tooth cleaning aid comprising a strip consisting substantially of rubber made directly from latex and suitable for insertion between adjacent teeth for rubbing against a tooth in order to clean it.

It is an essential feature of the invention that the rubber strip be directly from latex. Such material is capable of much larger degrees of lengthwise stretching without breaking than is possible with other types of rubber. Other forms of natural rubber are made by coagulating natural rubber latex followed by mastication into small rubber gtanules which are subsequently reformed to give a material which is shaped by heat and pressure to give a desired product. Thus, the very long polymer chains of natural rubber are broken. When a small cut or other surface damage occurs in, for instance, a conventional rubber band, the band is consequently weakened and its resistance to breakage when stretched is greatly reduced. Indeed, the unavoidable tolerances during manufacture create weak spots which result in breakage and failure of the rubber for only relatively small longitudinal stretching.

Rubber made directly from latex is referred to hereinafter as "latex rubber". In order to produce the strip of the present invention, latex may be extruded from nozzles below the surface of an acid bath in which the acid preferably flows continuously past the nozzles. Thus, the polymer chains remain intact and the resulting strips are capable of being stretched to a much greater extent than with other types of rubber before breakage. Further, a much larger stretching force applied to the strips is necessary before breakage occurs. Also, surface damage such as small nicks or cuts has very little effect on the strength of the latex rubber strips. Thus, damage to the strip caused by insertion between adjacent teeth has little or no effect on the properties of the strip.

According to another aspect of the invention, there is provided a method of cleaning teeth in which a strip consisting substantially of rubber made directly from latex is inserted between adjacent teeth and moved longitudinally while in contact with the surface of a tooth so as to clean the surface.

The strip may be used not only to clean the surfaces of teeth within the gap between adjacent teeth, but also to clean the surfaces between a tooth and the gum. Thus, the strip is capable of cleaning plaque or other deposits from those surfaces of teeth which are not properly cleaned by a conventional tooth brush or tooth pick. The surface of the latex rubber strip may be

3

smooth or may be somewhat rough and abrasive and provides efficient cleaning without damaging the tooth surface. Also, the strip is sufficiently flexible and soft not to hurt or damage the gum.

The strip may be sufficiently wide so as to be insertable between adjacent teeth only after stretching to reduce temporarily its width. The strip is then inserted between adjacent teeth in its stretched condition and then released so that its side surfaces press against the facing surfaces of adjacent teeth. By pulling the strip in alternate directions, the pressure of the strip on these teeth surfaces causes efficient cleaning to be achieved.

The strip may have an elongate triangular cross-section so that, when inserted between adjacent teeth with its base side adjacent the gum, the edges of the strip can clean the surfaces between the teeth and the gum while the facing surfaces of the teeth, which may be inclined for instance when the gum has receded from the teeth, are cleaned by the wider strip surfaces. However, the strip may also be inserted the other way up between the teeth.

The strip may be coated or impregnated by a substance to be released during use of the strip. For instance, an antiseptic such as a fluoride or a pleasant smelling or tasting substance such as peppermint may be used to assist in cleaning the teeth or to make the cleaning more pleasurable.  Preferably, the substance is in the form of a microencapsulation coating.  Such a coating consists of a large number of minute particles or droplets of the substance encapsulated in minute capsules adhered to the surfaces of the strip.  The substance is thus retained in the capsules on the strip until the pressure of the strip on a tooth causes the capsules to break or the saliva in the mouth dissolves the capsules, thus releasing the substance only when the strip is being used.

The invention will be further described, by way of example, with reference to the accompanying drawings, in which:

Figure 1 shows front and plan views illustrating the use of a first embodiment of the invention;

Figure 2 shows front and plan views illustrating the use of a second embodiment of the invention; and

Figure 3 illustrates the use of a third embodiment of the invention.

In the drawings, like reference numerals refer to like parts.

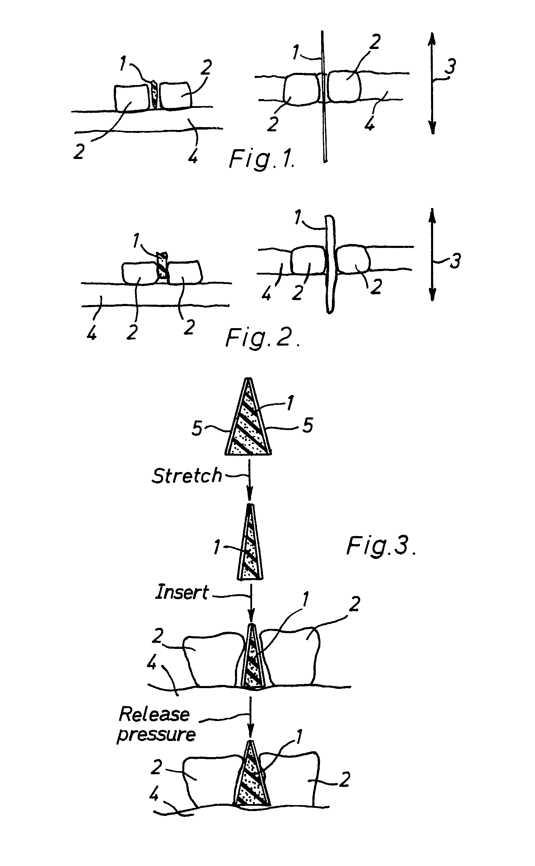

The lefthand half of Figure 1 is a front view illustrating the use of a preferred tooth cleaning aid comprising a strip 1 of latex rubber, whereas the righthand side of Figure 1 is a plan view thereof. The strip 1 in Figure 1 has an elongate transverse cross-sectional shape and is relatively thin so as to be suitable for insertion and use between adjacent teeth 2 having a relatively narrow gap therebetween. In order to use the strip 1 shown in Figure 1, the strip is thus inserted between adjacent teeth 2 in its stretched state. The strip is then pulled against the surface of one of the teeth 2 and is moved backwards and forwards in the directions indicated by the arrow 3. By moving the strip 1 up and down with respect to the gum 4 while pulling the strip backwards and forwards, the surfaces of the strip 1 which may be smooth or slightly rough and mildly abrasive clean the surface of each tooth 2 and the gum. The strip 1 may further be pulled across the front of each tooth in turn while continuing the backward and forward movement such that the lower edge of the strip enters the gap between the base of the tooth and the gum. Thus, this portion of the tooth surface is also cleaned efficiently by means of the strip 1.

Figure 2 shows another preferred tooth cleaning aid in the form of a strip 1 of latex rubber. However, this strip differs from the strip of Figure 1 in that it is of substantially greater thickness such that it may be inserted and used between adjacent teeth 2 having a relatively large gap therebetween  In order to use the strip 1 of Figure 2, it is first stretched longitudinally by pulling at either end of the strip so that it assumes the appearance and the width of the strip shown in Figure 1. The strip of Figure 2 may then be inserted between adjacent teeth 2 and the pull on the ends of the strip is released so that the strip returns to its normal thickness as shown in Figure 2. The strip therefore is a tight fit in the gap between the adjacent teeth 2 and is squashed by the adjacent surfaces of these teeth. The strip 1 is then pulled backwards and forwards in the directions indicated by the arrow 3 either while under tension or with the trailing end of the strip in each case being released. The surfaces of the strip 1 press against the facing surfaces of the teeth 2. These surfaces of the strip are rough and possible slightly abrasive and thus provide a cleaning action for the teeth 2. The strip may also be moved towards and away from the gum 4 to assist in thorough cleaning of the facing surfaces of the teeth 2. Thus, with this embodiment, it is unnecessary for the strip 1 to be pulled against the tooth to be cleaned as the squeezing of the strip by the adjacent teeth 2 provides the necessary pressure of the strip on each tooth. Further, the facing surfaces of each pair of adjacent teeth 2 are cleaned simultaneously. Although the latex rubber strip 1 is sufficiently soft and flexible not to damage the gum 4, efficient cleaning in the gap between the base of the teeth and the gums is not possible with this embodiment.

Figure 3 illustrates another embodiment of tooth cleaning aid comprising a latex rubber strip 1. However, whereas the strips shown in Figures 1 and 2 have lateral cross-sectional shapes with essentially parallel major surfaces, the strip shown in Figure 3 has a triangular lateral cross-sectional shape. Figure 3 shows the different stages for inserting the strip between adjacent teeth 2. The strip is first stretched longitudinally by pulling its ends so as to reduce its cross-sectional width to such an extent that it may be readily inserted between the adjacent teeth 2. Finally, when the strip has been inserted between the teeth, the tension is to be released partly or fully so that it returns to its normal cross-sectional shape and size, thus forming a tight fit between the teeth 2. If necessary, the strip may be maintained under some longitudinal tension so as to regulate the pressure exerted by the major surfaces of the strip on the adjacent teeth 2. The band is then drawn forwards and backwards with each end thereof being released alternately so that the gentle rubbing or abrasive action against the teeth or gums effectively cleans them. Because of its cross-sectional shape, the strip of Figure 3 may be used where a generally triangular or enlarged gap exists between the adjacent teeth 2, for instance if the gums have receded. Further, the lower edges of the band permit more efficient cleaning in the gap between the gums and teeth than is possible with the embodiment of Figure 2.

The strips 1 shown in the accompanying drawings may all be coated or impregnated with a substance such as an antiseptic or a pleasant tasing or smelling substance, such as a breath freshener. The embodiment of Figure 3 is shown with surface coating 5 of such a substance. The surface coatings 5 are provided by adhering a large number of minute capsules to the surfaces of the strip 1, the substance being contained in these tiny capsules. Such capsules may be provided by any known microencapsulation technique. Thus, the substance is protected by this encapsulation until the strip 1 is used to clean the teeth 2. The pressure of the strip surfaces against the teeth causes the minute capsules to rupture and thus to give up the substance contained therein, which is then available to perform its function, such as of freshening the breath of the user.

The latex rubber strips 1 of the preferred embodiments are very resistant to breakage and are capable of a relatively large amount of stretching without damage. However, the strips are sufficiently soft to be gentle on the gums but allow efficient cleaning of the surfaces of the teeth without causing damage thereto. Thus, efficient removal of microorganisms and other deposits on the side of the teeth and in the small gaps between the bases of the teeth and the gums can be achieved by daily cleaning of the

0028130

9

teeth with the latex rubber strips. Further, the relatively large areas of the surfaces of the strip provide good coverage and relatively swift efficient cleaning. In one preferred embodiment, the strip was about 4" long and was capable of stretching to about 20"-30". Its normal width was about $\frac{3}{8}$", but this decreased to about $\frac{1}{4}$" when stretched. The normal thickness of the strip was a 1/32", decreasing to about half this thickness when stretched. A number of such strips may be packaged together so as to be ready to use. Alternatively, a continuous strip could be provided for the user to cut up into shorter strips when required. Each strip may be thrown away after use.

Various modifications may be made within the scope of the invention. For instance, the strips may be provided along their surface with small pits in which is provided tooth powder or the like. Further, the strip may be provided along its length with bristles to assist in the cleaning action. The surfaces of the strip may be coated by tooth powder to assist further in teeth cleaning.

0028130

1.

Claims:

1.      A tooth cleaning aid comprising a strip consisting substantially of rubber made directly from latex and suitable for insertion between adjacent teeth for rubbing against a tooth in order to clean it.

2.      A tooth cleaning aid as claimed in claim 1, in which the strip is sufficiently wide so as to be insertable between adjacent teeth only after stretching to reduce temporarily its width.

3.      A tooth cleaning aid as claimed in claim 1, in which the strip has an elongate triangular lateral cross-section.

4.      A tooth cleaning aid as claimed in any one of the preceding claims, in which the strip is coated with a substance to be released during use of the strip.

5.      A tooth cleaning aid as claimed in claim 4, in which the substance is tooth powder.

6.      A tooth cleaning aid as claimed in claim 4, in which the coating consists of a large number of minute particles or droplets of the substance encapsulated in minute capsules adhered to the surfaces of the strip.

7.      A tooth cleaning aid as claimed in any one of the preceding claims, in which the strip is impregnated with a substance to be released during use of the strip.

8.      A method of cleaning teeth in which a strip consisting substantially of rubber made directly from latex is inserted between adjacent teeth and moved longitudinally while in contact with the surface of a tooth so as to clean the surface.

1/1

Fig.1.

Fig.2.

Stretch

Insert

Release
pressure

Fig.3.

0028130

European Patent Office

**EUROPEAN SEARCH REPORT**

Application number

EP 80 30 3752

| Category | Citation of document with indication, where appropriate, of relevant passages | Relevant to claim |
|---|---|---|
| | US - A - 3 775 848 (BARNETT)<br>  * Column 6, lines 2-29; column 7, lines 52-60; figures * | 1,3,4,7,8 |
| | -- | |
| | US - A - 3 800 812 (JAFFE)<br>  * Abstract * | 1,4,7,8 |
| | -- | |
| | GB - A - 2 018 603 (WALTER)<br>  * Claim 1; figures * | 1,3,8 |
| | -- | |
| | US - A - 3 943 949 (ASHTON)<br>  * Column 2, lines 62-68; column 3, lines 1-30; figure 1 * | 4,6,7,8 |
| | -- | |
| | US - A - 3 897 795 (CENTRIX)<br>  * Abstract * | 4,7,8 |
| | -- | |
| | GB - A - 1 464 893 (BENGTSSON)<br>  * Page 2, lines 38-45 * | 1,2,8 |
| | --- | |

**DOCUMENTS CONSIDERED TO BE RELEVANT**

**CLASSIFICATION OF THE APPLICATION (Int. Cl.³)**

A 61 C 15/00

**TECHNICAL FIELDS SEARCHED (Int. Cl.³)**

A 61 C

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 05-02-1981 | VANRUNXT |

EPO Form 1503.1  06.78